# EUROPEAN PATENT APPLICATION

(11) **EP 2 685 294 A1**
(43) Date of publication of application: **15.01.2014**
(21) Application number: 11860436.2
(22) Date of filing: 28.10.2011
(51) Int. Cl.: G02B 5/26

(54) **INFRARED REFLECTIVE FILM**

(30) Priority: 09.03.2011 JP 2011051573
(71) Applicant: Nitto Denko Corporation, Ibaraki-shi Osaka 567-8680 (JP)
(72) Inventor: OHMORI, Yutaka, Ibaraki-shi, Osaka 567-8680 (JP); KAWASAKI, Motoko, Ibaraki-shi, Osaka 567-8680 (JP); TSUDA, Hisashi, Ibaraki-shi, Osaka 567-8680 (JP)
(74) Representative: Grünecker, Kinkeldey, Stockmair & Schwanhäusser
(86) International application number: PCT/JP2011/074895
(87) International publication number: WO 2012/120725

(57) **Abstract**

An infrared reflective film (10) comprises: an infrared reflective layer (11); a transparent film (12); and an adhesion layer (13). The infrared reflective layer (11) has two main surfaces. The transparent film (12) is formed of a polycycloolefin layer and supports one main surface of the infrared reflective layer (11). The adhesion layer (13) is formed on the other main surface of the infrared reflective layer (11).

## Description

### TECHNICAL FIELD OF THE INVENTION

The present invention relates to an infrared reflective film.

### BACKGROUND ART

An infrared reflective film 100 shown in FIG. 1 (b) is conventionally well known (for instance, Japanese Unexamined Patent Application Publication No. JP 2000-334876 A). FIG. 1 (b) is a cross-sectional view of a conventional infrared reflective film 100. An infrared reflective layer 101 is laminated on one surface of a transparent film 102. A protective film 103 is laminated on the infrared reflective layer 101. An adhesion layer 104 is laminated on the other surface of the transparent film 102. In this way, an infrared reflective film 100, in which the infrared reflective layer 101 is arranged between the transparent film 102 and the protective film 103, is produced. Such an infrared reflective film 100 is bonded to a window of a building or a vehicle or the like to be used for improvement of cooling and heating effects. Further, the infrared reflective film 100 is bonded to a refrigerator freezer show case to be used for improvement of a refrigerating effect.

The protective layer 103 is generally formed of a polyethylene terephthalate film. The protective film 103 of the infrared reflective film 100 is used to provide the infrared reflective layer 101 with scratch resistance and weather resistance.

When a polyethylene terephthalate film is used as a protective film 103, infrared vibration absorption is often generated in a far-infrared region at a wavelength of 5 µm to 25 µm in the polyethylene terephthalate film because polyethylene terephthalate contains large amounts of a C=O group, a C-O group, and an aromatic group. Consequently, in the infrared reflective film 100 in which the polyethylene terephthalate film is used as the protective film 103, the protective film 103 absorbs irradiated light from outside and reflected light of the infrared reflective layer 101, so that infrared rays are easily emitted (the protective film 103 has a high infrared emissivity). As a result, the infrared reflective film 100 in which a polyethylene terephthalate film is used as the protective film 103 sometimes may not have sufficient thermal insulation.

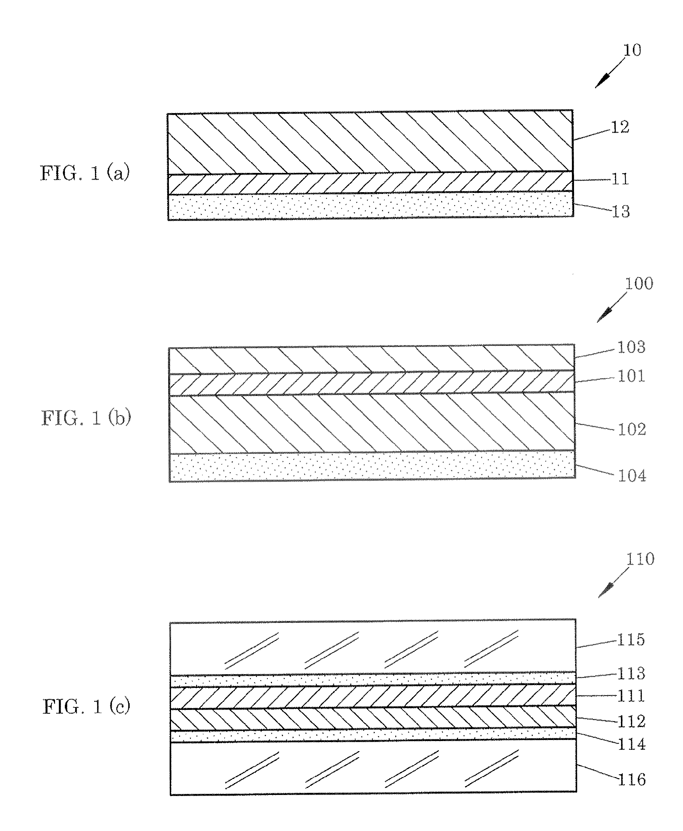

FIG. 1(c) is a cross-sectional view of a conventional heating insulating laminated glass 110. In the heating insulating laminated glass 110, an infrared reflective layer 111 and an infrared absorption layer 112 are arranged between two glass plates 115, 116 via intermediate layers 113, 114 (For instance, Japanese Unexamined Patent Application Publication No. JP 2010-222233 A). Such a heating insulating laminated glass 110 is used for a window of a building or a vehicle or the like to improve a cooling effect.

However, in the heating insulating laminated glass 110, since the infrared absorption layer 112, the intermediate layers 113, 114, and the glass plates 115, 116 are needed in addition to the infrared reflective layer 111, the constitution of the heating insulating laminated glass 110 is complicated.

### SUMMARY OF THE INVENTION

There are fears that the infrared reflective film 100 in which a polyethylene terephthalate film is used as the protective layer 103 may not have sufficient thermal insulation. The heating insulating laminated glass 110 which comprises the infrared reflective layer 111, the infrared absorption layer 112, the intermediate layers 113, 114 has a complicated constitution. It is an object of the present invention to realize an infrared reflective film having a simple constitution and sufficient thermal insulation.

### MEANS FOR SOLVING THE PROBLEMS

According to the present invention, there is provided an infrared reflective film including an infrared reflective layer, a transparent film, and an adhesion layer. The infrared reflective layer has two main surfaces. The transparent film is formed of a polycycloolefin layer and supports one main surface of the infrared reflective layer. The adhesion layer is formed on the other main surface of the infrared reflective layer.

In a second preferred aspect of the infrared reflective film according to the present invention, polycycloolefin is polynorbornene.

In a third preferred aspect of the infrared reflective film according to the present invention, the adhesion layer is formed of an acrylic adhesive.

In a fourth preferred aspect of the infrared reflective film according to the present invention, the infrared reflective film has a normal emissivity of 0.4 or lower.

In a fifth preferred aspect of the infrared reflective film according to the present invention, the infrared reflective layer comprises a multi-layer laminated layer composed of a plurality of metal thin layers and a plurality of high refractive index thin layers.

In a sixth preferred aspect of the infrared reflective film according to the present invention, the metal thin layer is made of any one of gold, silver, copper or an alloy of those.

In a seventh preferred aspect of the infrared reflective film according to the present invention, the high refractive index thin layer has a refractive index of 1.8 to 2.7.

In an eighth preferred aspect of the infrared reflective film according to the present invention, the high refractive index thin layer is composed of any one of indium tin oxide, titanium oxide, zirconium oxide, tin oxide, indium oxide or a combination of those.

### EFFECT OF THE INVENTION

The infrared reflective film of the present invention has high thermal insulation regardless of a simple constitution.

### BRIEF DESCRIPTION OF THE DRAWINGS

FIG. 1 (a) is a cross-sectional view of an infrared reflective film of the present invention;
FIG. 1 (b) is a cross-sectional view of a conventional infrared reflective film;
FIG. 1 (c) is a cross-sectional view of a conventional heating insulating laminated glass; and

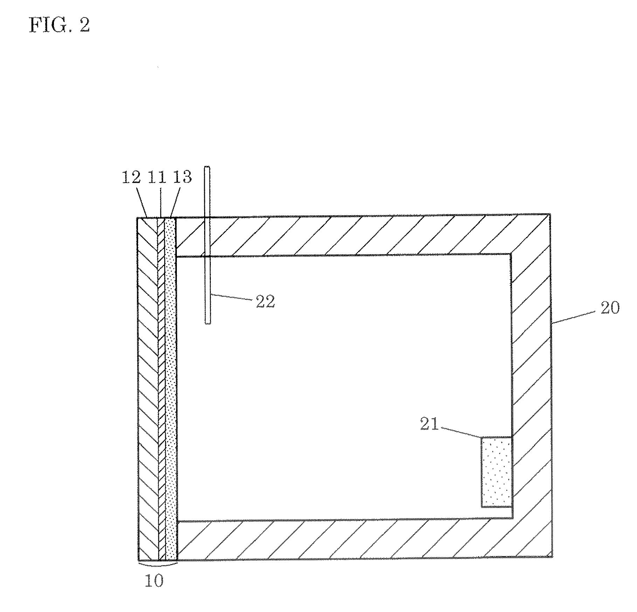

FIG. 2 is a view illustrating a thermal insulation measuring device of an infrared reflective film.

### DESCRIPTION OF THE PREFERRED EMBODIMENTS

### [Infrared reflective film]

FIG. 1 (a) is a cross-sectional view of an infrared reflective film 10 of the present invention. The infrared reflective film 10 comprises: an infrared reflective layer 11; a transparent film 12 that supports one main surface of the infrared reflective layer 11; and an adhesion layer 13 formed on the other main surface of the infrared reflective layer 11. The transparent film 12 is composed of a polycycloolefin layer. The entire surface of the transparent film 12 is covered by the infrared reflective layer 11.

Since the polycycloolefin layer is mainly composed of a carbon atom and a hydrogen atom, stretching vibrations of a C-H group appear on a short wavelength-side (mid-infrared region) of infrared rays. This makes it possible to minimize emissivity of the infrared reflective film. As a result, it is possible to obtain high thermal insulation in the infrared reflective film of the present invention.

Since the transparent film 12 supports one main surface of the infrared reflective layer 11, the transparent film 12 also serves as a protective film. Accordingly, regardless of a simple constitution, the infrared reflective film 10 being an embodiment of the present invention has thermal insulation and weather resistance as well. The infrared reflective film 10 being an embodiment of the present invention has a simple constitution and a small film thickness due to a small number of layers.

The infrared reflective film being an embodiment of the present invention preferably has a normal emissivity of 0.4 or lower, more preferably, 0.2 or lower.

### [Infrared reflective layer]

The infrared reflective layer 11 to be used in the present invention transmits visible light and reflects infrared rays. The infrared reflective layer 11 alone preferably has a visible light transmittance of 50% or higher. The infrared reflective layer 11 alone preferably has a normal emissivity of 0.1 or lower.

The infrared reflective layer 11 is a multi-layer obtained by generally laminating a large number of metal thin layers and a large number of high refractive index thin layers such as titanium dioxide and zirconium dioxide. A material for forming a metal thin layer is typically gold, silver, copper and the like or an alloy of those. The metal thin layer is adjusted to preferably have a thickness in the range of 5 nm to 1,000 nm so that both the visible light transmittance and the infrared ray reflectivity may be high.

The high refractive index thin layer preferably has a refractive index in the range of 1.8 to 2.7. Indium tin oxide, titanium oxide, zirconium oxide, tin oxide, indium oxide and the like or a combination of those are respectively used as a material for forming a high refractive index thin layer. The high refractive index thin layer is so adjusted to preferably have a thickness in the range of 20 nm to 80 nm.

A metal thin layer and a high refractive index thin layer are typically formed by the sputtering method, the vacuum deposition method, and the plasma chemical vapor deposition method or the like. It is possible to tightly laminate the infrared reflective layer 11 on the transparent film 12. The side that is in contact with the transparent film 12 may be either the metal thin layer or the high refractive index thin layer.

### [Transparent film]

The transparent film 12 to be used in the present invention is composed of a polycycloolefin layer. The term "polycycloolefin" herein means a polymer or a copolymer obtained by using an alicyclic compound with a double bond. The polycycloolefin layer is composed of a carbon atom and a hydrogen atom in the basic structure thereof, so that absorption in a far-infrared region is small. Accordingly, it is possible to increase the minimum transmittance of light (for instance, 50% or higher) in the range of a wavelength of 5 µm to 25 µm (far-infrared region) by adjusting the thickness of the transparent film 12.

Polycycloolefin to be used for the transparent film 12 is preferably polynorbornene. Polynorbornene has little absorption in an infrared region and is superior in thermal insulation and weather resistance. Commercially available polynorbornene (for instance, ZEONEX or ZEONOR produced by ZEON CORPORATION) may be used as polynorbornene.

The transparent film 12 preferably has a thickness of 10 µm to 150 µm. When the transparent film 12 has a thickness less than 10 µm, there are fears that bearing properties of the infrared reflective layer 11 may be lowered. On the other hand, when the transparent film 12 has a thickness of over 150 µm, as a result, absorption of light in the infrared region is increased and there are fears that thermal insulation may be lowered.

### [Adhesion layer]

The infrared reflective film 10 being an embodiment of the present invention is bonded to a target to which a heat insulating effect is expected. While the adhesion layer 13 to be used in the present invention is not particularly limited, the adhesion layer 13 is preferably formed of an acrylic adhesive. An acrylic adhesive is obtained by allowing a copolymer of alkylacrylate ester having a carbon number of about 2 to 10 in an alkyl group to react with a cross-linking agent containing polyisocyanate and a melamine resin or the like. The adhesion layer preferably has a thickness of 1 µm to 50 µm.

### EXAMPLES

### [Example 1]

An infrared reflective layer was formed by alternatively laminating an ITO (indium tin oxide) layer with a thickness of 35 nm and an APC (silver-palladium-copper) layer with a thickness of 15 nm on a polycycloolefin film with a thickness of 23 µm (ZEONOR produced by ZEON CORPORATION). The ITO layer is an indium tin oxide layer. The APC layer is an alloy layer of 98% by weight of silver, 1% by weight of palladium, and 1% by weight of copper.

Next, an acrylic adhesive layer with a thickness of 15 µm was formed on a surface of the infrared reflective layer by a transfer method.

Table 1 shows normal emissivity and thermal insulation test results of a thus obtained infrared reflective film (with a visible light transmittance of 82%).

### [Example 2]

A polycycloolefin film with a thickness of 40 µm (ZEONOR produced by ZEON CORPORATION) was used as a transparent film. An infrared reflective film was produced in the same manner as in Example 1 except for that. Table 1 shows normal emissivity and thermal insulation test results of a thus obtained infrared reflective film (with a visible light transmittance of 82%).

### [Example 3]

A polycycloolefin film with a thickness of 100 µm (ZEONOR produced by ZEON CORPORATION) was used as a transparent film. An infrared reflective film was produced in the same manner as in Example 1 except for that. Table 1 shows normal emissivity and thermal insulation test results of a thus obtained infrared reflective film (with a visible light transmittance of 81%).

### [Example 4]

A polycycloolefin film with a thickness of 7 µm (ZEONOR produced by ZEON CORPORATION) was used as a transparent film. An infrared reflective film was produced in the same manner as in Example 1 except for that. Table 1 shows normal emissivity and thermal insulation test results of a thus obtained infrared reflective film (with a visible light transmittance of 82%).

### [Comparative Example 1]

A polyethylene terephthalate film with a thickness of 25 µm (Diafoil produced by MITSUBISHI PLASTICS, INC.) was used as a transparent film. An infrared reflective film was produced in the same manner as in Example 1 except for that. Table 1 shows normal emissivity and thermal insulation test results of a thus obtained infrared reflective film (with a visible light transmittance of 82%).

### [Comparative Example 2]

A polyethylene terephthalate film with a thickness of 100 µm (Diafoil produced by MITSUBISHI PLASTICS, INC.) was used as a transparent film. An infrared reflective film was produced in the same manner as in Example 1 except for that. Table 1 shows normal emissivity and thermal insulation test results of a thus obtained infrared reflective film (with a visible light transmittance of 80%).

**[Table 1]**

| | Transparent film | | Normal emissivity | Thermal insulation test (°C) |
|---|---|---|---|---|
| | Material | Thickness (µm) | | |
| Example 1 | Polycycloolefin | 23 | 0.16 | 54.7 |
| Example 2 | Polycycloolefin | 40 | 0.21 | 54.8 |
| Example 3 | Polycycloolefin | 100 | 0.37 | 54.3 |
| Example 4 | Polycycloolefin | 7 | 0.10 | 55.9 |
| Comparative Example 1 | Polyethylene terephthalate | 25 | 0.58 | 53.5 |
| Comparative Example 2 | Polyethylene terephthalate | 100 | 0.80 | 53.2 |

### [Evaluation]

As indicated in Table 1, infrared reflective films in Examples 1 to 4 have temperatures in boxes higher than those of infrared reflective films in Comparative Examples 1 and 2, resulting in higher thermal insulating effect. In the infrared reflective film of the present invention, it is important that a transparent film is formed of a polycycloolefin layer. The infrared reflective film in which the transparent film is formed of a polycycoolefin layer exhibits higher thermal insulation than the infrared reflective film in which the transparent film is formed of a polyethylene terephthalate.

### [Measuring Method]

### [Normal emissivity]

A regular reflectance of infrared light at a wavelength of 5 µm to 25 µm was measured using a Fourier transform infrared spectrometer (FT-IR) equipped with an angular adjusting reflective accessory produced by VARIAN, INC. to determine normal emissivity in accordance with JIS (Japanese Industrial Standards) R 3106-2008 (a testing method of transmittance, reflectivity, emissivity, and solar radiation heat gain coefficient of a plate glass kind).

### [Visible light transmittance]

The visible light transmittance of an infrared reflective film was measured in accordance with JIS A 5759-2008 (a film for architectural window).

[Thermal insulation] An adhesion layer 13 of the infrared reflective film 10 is attached to an opening of an insulated box 20 with a heater 21 and a thermocouple 22 so as to tightly seal the insulated box 20. The inner dimensions of the insulated box 20 are 10 cm ×10 cm x14 cm. The inside of the insulated box 20 was heated by the heater 21 having constant output and the temperature in a portion having a distance of 1 cm from the infrared reflective film 10 in the insulated box 20 was measured with the thermocouple 22. The more thermal insulation of the infrared reflective film 10 is superior, the more the temperature in the insulated box 20 is higher. The thermal insulation of the infrared reflective film 10 was evaluated in accordance with the temperature in the insulated box 20.

### INDUSTRIAL APPLICABILITY

Uses of the infrared reflective film 10 of the present invention are not particularly limited. The infrared reflective film 10 of the present invention is typically bonded to a window of a building or a vehicle or the like, a transparent case for putting plants into it, and a refrigerator show case or a freezer show case to be used to improve cooling and heating effects and prevent rapid temperature changes.

## Claims

1. An infrared reflective film (10), comprising:
an infrared reflective layer (11) having two main surfaces;
a transparent film (12) formed of a polycycloolefin layer that supports one main surface of the infrared reflective layer (11); and
an adhesion layer (13) formed on the other main surface of the infrared reflective layer (11).

2. The infrared reflective film (10) according to claim 1, wherein polycycloolefin is polynorbornene.

3. The infrared reflective film (10) according to claim 1 or claim 2, wherein the adhesion layer (13) is formed of an acrylic adhesive.

4. The infrared reflective film (10) according to claim 1 or claim 2, wherein the infrared reflective film (10) has a normal emissivity of 0.4 or lower.

5. The infrared reflective film (10) according to claim 1, wherein the infrared reflective layer (11) comprises a multi-layer laminated layer composed of a plurality of metal thin layers and a plurality of high refractive index thin layers.

6. The infrared reflective film (10) according to claim 5, wherein the metal thin layer is made of any one of gold, silver, copper or an alloy of those.

7. The infrared reflective film (10) according to claim 5 or claim 6, wherein the high refractive index thin layer has a refractive index of 1.8 to 2.7.

8. The infrared reflective film (10) according to claim 5 or claim 6, wherein the high refractive index thin layer is composed of any one of indium tin oxide, titanium oxide, zirconium oxide, tin oxide, indium oxide or a combination of those.

9. The infrared reflective film (10) according to claim 7, wherein the high refractive index thin layer is composed of any one of indium tin oxide, titanium oxide, zirconium oxide, tin oxide, indium oxide or a combination of those.
